# FASCICULE DE BREVET EUROPEEN

(11) **EP 1 461 783 B1**
(45) Date de publication et mention de la délivrance du brevet: **03.05.2006**
(21) Numéro de dépôt: 02804236.4
(22) Date de dépôt: 29.11.2002
(51) Int. Cl.: G07D 9/00, G07F 17/32

(54) **DISPOSITIF DE RANGEMENT ELECTRONIQUE POUR JETONS DE JEU.**
ELEKTRONISCHE EINRICHTUNG ZUM SPEICHERN VON SPIELCHIPS
ELECTRONIC DEVICE FOR STORING GAMING CHIPS

(30) Priorité: 03.12.2001 FR 0115576
(43) Date de publication de la demande: 29.09.2004
(73) Titulaire: Gaming Partners International, 21420 Savigny-les-Beaune (FR)
(72) Inventeur: GELINOTTE, Emmanuel, Route de Bouze, 21420 Savigny-les-Beaune (FR)
(74) Mandataire: Poidatz, Emmanuel
(86) Numéro de dépôt international: PCT/FR2002/004112
(87) Numéro de publication internationale: WO 2003/049048

(56) Documents cités:
- FR-A- 2 745 103
- US-A- 5 651 548

## Description

La présente invention concerne le rangement de jetons de jeu, également appelés jetons de casino. Par jeton de jeu on entend tout élément en forme de disque ou de plaque et représentant une valeur nominale ou non. D'une façon générale les jetons sont fabriqués en matière plastique rigide et résistante aux rayures. Les jetons présentent des motifs variés en dessins et en couleurs pour former un décor plus ou moins complexe et réduire les risques de falsification et/ou de reproduction frauduleuse. Certains jetons intègrent un circuit électronique à mémoire dans lequel sont stockées des informations concernant le jeton, notamment son numéro ou code d'identification et sa valeur numérique. Ces jetons équipés de circuits électroniques à mémoire sont également désignés jetons à mémoire électronique. Selon les modèles des jetons, les circuits électroniques sont du type à mémoire simple PROM, à mémoire reprogrammable EEPROM ou même à microprocesseurs assortis d'une mémoire.

Plus particulièrement, l'invention concerne le rangement des jetons à mémoire électronique dans un casier à jetons qui pourra par exemple être placé sur ou dans une table de jeu. De tels casiers ou plateaux à jetons servent notamment de réserves à jetons aux points de change et/ou aux tables de jeux. Le casier contient les jetons échangés contre des valeurs, par exemple des jetons ou plaques de valeurs faciales différentes, monnaie, etc.. Il est également possible d'y prélever les jetons nécessaires au paiement des mises gagnantes et d'y ranger les jetons provenant des mises perdantes. Le nombre de jetons contenu dans un casier est variable et par conséquent la valeur globale représentée par ces jetons évolue dans le temps.

Dans le but de faciliter le suivi du contenu en jetons du casier et des mouvements entrée/sortie des jetons afin de mieux contrôler ces mouvements et de ce fait de lutter plus efficacement contre les fraudes, il a déjà été proposé dans la demande WO 97/30414 au nom du demandeur des dispositifs de rangements pour jetons de jeu à circuit électronique à mémoire comportant une structure de rangement analogue muni d'au moins une section de rangement en colonne, ci-après colonne, destinée à recevoir des jetons, et une unité électronique de dialogue comportant des moyens de lecture dans la mémoire des jetons pour communiquer par des moyens formant antenne avec les jetons présents dans au moins une colonne de ladite structure de rangement. Grâce à l'utilisation d'algorithmes d'anti-collision, l'unité de dialogue est capable de procéder à une lecture/écriture simultanées de tous les jetons présents dans une colonne du casier/plateau. Dans une première variante le dispositif de rangement électronique comporte des antennes à larges boucles planes entourant les colonnes de jetons ; dans une seconde variante les antennes de type à enroulement circulaire et à noyau de ferrite optionnel sont disposées à l'extrémité inférieure des colonnes.

Quoique donnant les résultats de fiabilité et de sécurité escomptés, les deux variantes du dispositif de rangement électronique connues de la demande de brevet précitée sont limitées quant au nombre maximal de jetons lus dans une colonne à environ une vingtaine de jetons pour des jetons circulaires classiques d'environ 4 mm d'épaisseur.

Ces limitations quantitatives sont assez gênantes pour les exploitants de casino qui utilisent des casiers ou plateaux présentant des colonnes de grande capacité capables d'accueillir entre 60 et 80 jetons. De plus une simple extension géométrique des antennes connues ne donne pas de bons résultats tant au niveau du nombre de jetons lus qu'au niveau des dimensions géométriques des casiers et/ou des plateaux qui deviennent incompatibles avec les tables de jeu et/ou de change utilisées dans les casinos.

L'invention a pour objet de proposer des dispositifs de rangement électroniques à grande capacité de jetons et adaptés pour éliminer ou tout du moins réduire sensiblement les inconvénients présentés ci-avant.

A cette fin, l'invention propose un dispositif de rangement pour jetons de jeu à circuit électronique à mémoire comportant une structure de rangement munie d'au moins une section de rangement en colonne, ci-après colonne, destinée à recevoir des jetons, et une unité électronique de dialogue comportant des moyens de lecture dans la mémoire des jetons pour communiquer par des moyens formant antenne avec les jetons présents dans au moins une colonne de ladite structure de rangement, le dispositif étant caractérisé en ce que les moyens formant antenne comportent au moins une antenne de type bobiné comportant un barreau de ferrite entouré en tout ou partie d'une bobine et présentant à chaque extrémité au moins une patte plane de ferrite s'étendant dans un plan sensiblement perpendiculaire au barreau, les pattes étant disposées en vis-à-vis deux par deux en tout ou partie aux deux extrémités d'au moins une colonne.

Comme expliqué en détails dans la description qui va suivre, la géométrie de la structure de ferrite de l'antenne intégrée dans le dispositif de rangement selon l'invention permet de concentrer un champ magnétique important entre les deux pattes en vis-à-vis au niveau d'une zone axiale de la colonne sur une distance sensiblement égale à la longueur du barreau de ferrite. Cette structure d'antenne permet d'accroître les performances de lecture/écriture des jetons par l'antenne et d'augmenter la capacité des colonnes des plateaux à jetons de casino; des essais ayant montré que des colonnes de 100 jetons étaient possibles.

Selon un premier mode de réalisation de l'invention, le barreau de ferrite est associé à chaque extrémité du barreau à une pluralité de pattes disposées sensiblement symétriquement par rapport à un plan passant par ledit barreau ou par rapport à l'axe du barreau. Cette caractéristique permet la lecture de plusieurs colonnes de jetons voisines et/ou adjacentes à partir d'une même antenne. Il en résulte une simplification physique et électronique du dispositif de rangement électronique avec une efficacité accrue et grâce à une intégration facilitée des antennes dans les plateaux une réduction de l'encombrement total.

Selon une première variante, la pluralité de pattes comporte deux pattes soit alignées, soit disposées en U ou en V. Cette variante est utilisée avec une structure de rangement présentant un arrangement sensiblement plan de colonnes parallèles, les colonnes étant associées deux à deux à une antenne et disposées de part et d'autre du barreau correspondant, les extrémités libres de pattes s'étendant sensiblement en alignement avec les régions centrales des deux colonnes adjacentes.

De façon optionnelle ladite structure de rangement comporte au moins une colonne de grande largeur disposée en deux antennes présentant des pattes se projetant sensiblement en alignement avec les régions latérales de ladite colonne de grande largeur. Cet arrangement permet la lecture de plaques de jeu de forme rectangulaire en plus des jetons de jeu classiques en forme de disque.

Avantageusement la structure de rangement de type plateau comporte sur sa face supérieure un plateau réceptacle à jetons et dans lequel sont prévues les colonnes parallèles pour les jetons, séparées les unes des autres par des parois rectilignes, les barreaux d'antenne étant disposés sous lesdites parois, de préférence assez près du fond des colonnes.

Selon un mode de réalisation simple, robuste et permettant la modularité la structure de rangement comporte un châssis porteur des antennes et destiné à recevoir de façon amovible ou non le plateau réceptacle à jetons.

Selon une autre variante ladite pluralité de pattes est constituée de pattes rayonnant de façon équirépartie autour de l'axe de barreau disposé verticalement. Cette variante peut être utilisée avec un casier comportant une structure de rangement de type carrousel présentant un axe tubulaire vertical dans lequel est disposé ledit barreau.

Il est entendu pour la suite de l'exposé que le terme casier dans le cadre de l'invention recouvre tout type de porte-jetons (ou porte-plaques) à colonne, notamment les plateaux à colonnes horizontales ou légèrement inclinées et les casiers distributeurs verticaux.

Selon un mode de réalisation performant de l'invention, l'unité électronique de dialogue communique avec les jetons, selon un mode "sans contact", par ondes modulées par l'intermédiaire de moyens formant antenne et comportant au moins une antenne associée auxdits moyens de lecture, lesdits moyens formant antenne étant disposés par rapport à la structure de rangement de façon à assurer la communication avec les jetons présents dans au moins une colonne de ladite structure.

Avantageusement l'unité de dialogue comporte des moyens d'écriture dans la mémoire des jetons présents dans la colonne de la structure de rangement.

Tout aussi avantageusement, l'unité électronique de dialogue et les circuits électroniques à mémoire des jetons sont adaptés pour permettre à l'unité de dialogue de discriminer les jetons présents dans une même colonne.

Il est donc possible pour l'unité électronique de dialogue de déterminer en temps réel par communication avec la mémoire de chacun des jetons, le nombre de jetons à mémoire électronique contenus dans la structure de rangement, la valeur de chaque jeton, la valeur globale instantanée contenue dans le casier ou plateau, l'identité de chaque jeton, la valeur par type de dénomination ou toute autre information associée par exemple à l'identité du jeton. Ces informations peuvent être stockées, traitées en temps réel ou transmises à un serveur via un réseau pour permettre d'effectuer toutes les analyses et traitements désirés.

Parmi les avantages conférés par le dispositif de rangement électronique selon l'invention, la capacité de lecture d'une seule antenne (jusqu'à 2 x 100 jetons) permet de réduire le nombre d'antennes par plateau, d'éviter la multiplicité d'antenne par colonne et de simplifier très considérablement la structure physique et électronique du dispositif de rangement y compris de ses équipements électroniques.

L'invention concerne également une antenne pour dispositif de rangement électronique de jetons, plaques ou objets analogues plats à circuits électroniques à mémoire, caractérisée en ce qu'elle comporte un barreau de ferrite entouré en tout ou partie d'une bobine en fil conducteur et présentant à chaque extrémité au moins une patte plane de ferrite s'étendant dans un plan sensiblement perpendiculaire au barreau, les pattes étant disposées en vis-à-vis deux par deux en tout ou partie aux deux extrémités d'au moins une structure de rangement en colonne destinée à recevoir jetons, plaques ou objets analogues plats à circuits électroniques à mémoire.

Avantageusement le barreau de ferrite est associé à chaque extrémité du barreau à une pluralité de pattes disposées sensiblement symétriquement par rapport à un plan passant par le barreau ou par rapport au l'axe du barreau. En particulier ladite pluralité comporte deux pattes soit alignées, soit disposées en U ou en V.

D'autres buts, avantages et caractéristiques de l'invention apparaîtront à la lecture de la description qui va suivre de plusieurs modes de réalisation d'un dispositif de rangement pour jetons de jeu du type à mémoire électronique selon l'invention donnés à titre d'exemple non limitatif en référence aux dessins ci-annexés dans lesquels:
- la figure 1 est une représentation schématique d'un dispositif de rangement électronique pour jetons selon l'invention y compris de l'équipement électronique associé;
- la figure 2 est une vue schématique agrandie de dessus de la structure de rangement à plateau illustrée à la figure 1;
- la figure 3 est une vue schématique de côté de la structure de rangement à plateau selon la coupe AA de la figure 2; et
- les figures 4a à 4f sont des vues schématiques de côté de variantes d'antennes et du barreau de ferrite utilisables dans le cadre de la présente invention.

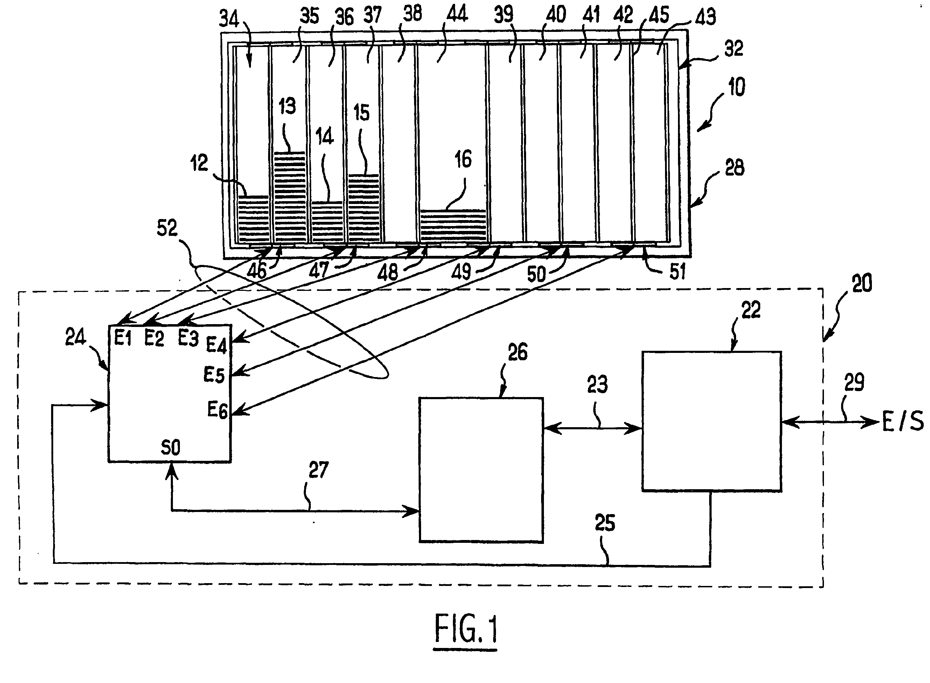

Le dispositif de rangement de jetons de jeu selon l'invention illustré à la figure 1 comporte pour l'essentiel une structure de rangement 10 pour jetons de jeu susceptible d'accueillir des jetons rangés en piles 12, 13, 14 et 15 (ou des plaques de jeu 16) et une unité électronique de dialogue 20 de lecture/écriture associée à des moyens formant antenne constitués de six antennes bobinées distinctes 46 à 51 dont les deux bornes sont reliées par une ligne multiple 52 à deux fils aux entrées doubles E1 à E6 d'une carte de multiplexage 24 formant interface de sélection séquentielle d'antenne et dont la sortie S0 est reliée par la ligne bidirectionnelle 27 à une carte électronique de lecture/écriture 26 comportant des moyens de lecture dans la mémoire des jetons d'une part et des moyens d'écriture dans la mémoire des jetons d'autre part contrôlés par une unité de traitement 22 à microprocesseur, en l'espèce un ordinateur de type PC. L'unité de traitement contrôle la carte de lecture/écriture 26 par la ligne 23 et la carte de multiplexage 24 par la ligne 25. De façon classique l'unité de traitement 22 communique vers l'extérieur (périphérique d'affichage, clavier, modem, interfaces réseau, serveur etc.. ) par des lignes d'Entrée/Sortie E/S 29. Sans sortir du cadre de l'invention, l'unité électronique de dialogue dans une version simplifiée ne comporte que des moyens de lecture dans la mémoire des jetons, sa structure et son fonctionnement étant similaires à ceux décrits ci-après pour l'unité de lecture/écriture 26.

L'unité de traitement 22, en l'espèce un ordinateur de type PC, commande l'interface de sélection d'antenne 24 par l'envoi de signaux sur la ligne 25 quand on utilise plusieurs antennes. L'ordinateur 22 comporte en autres un circuit horodateur capable de donner la date et l'heure de chaque événement, des mémoires EEPROM pour stocker les données échangées avec les jetons électroniques et une interface E/S 29 pour une connexion avec un ordinateur serveur (non représenté) soit en mode point à point, soit en mode réseau. L'ordinateur 22 est normalement équipé d'un clavier et d'un écran d'affichage. Le clavier permet par exemple de rentrer dans le système des informations telles que les commandes d'ouverture et/ou de fermeture de la table de jeu à laquelle est associé le casier, ou entrer le nom de l'opérateur, etc. De même, l'écran pourra afficher tout ou partie des informations suivantes: nombre total de jetons présents dans le casier, nombre de jetons par dénomination et/ou par colonne, valeur globale contenue dans une colonne et/ou dans le casier.

La carte de lecture/écriture 26 comprend un microprocesseur qui génère et interprète les signaux échangés avec les jetons à mémoire électronique et un oscillateur qui génère la fréquence porteuse (par exemple 125 kHertz) du signal radio-fréquence émis vers les antennes. La carte 26 contient également un convertisseur Analogique/Numérique (A/N), un modulateur et un amplificateur. A partir des commandes et informations provenant de l'ordinateur 22, la carte 26 génère un signal analogique radiofréquence modulé en amplitude qui, via l'antenne sélectionnée, véhicule l'énergie, les données et un signal de synchronisation vers les jetons à mémoire électronique. Les jetons et plaques électroniques 12-16 sont du type passif (sans stockage interne d'énergie) à lecture ou à lecture/écriture. L'antenne doit ainsi fournir l'énergie nécessaire au fonctionnement du circuit électronique du jeton et doit assurer la transmission des données. Les distances de travail antenne/jeton sont définies en fonction du flux magnétique nécessaire au bon fonctionnement du circuit électronique du jeton et dépendent donc de l'inductance, de la géométrie de l'antenne et du courant d'antenne. En l'espèce, on utilise pour les jetons à circuit électronique des antennes internes du type à bobines circulaires.

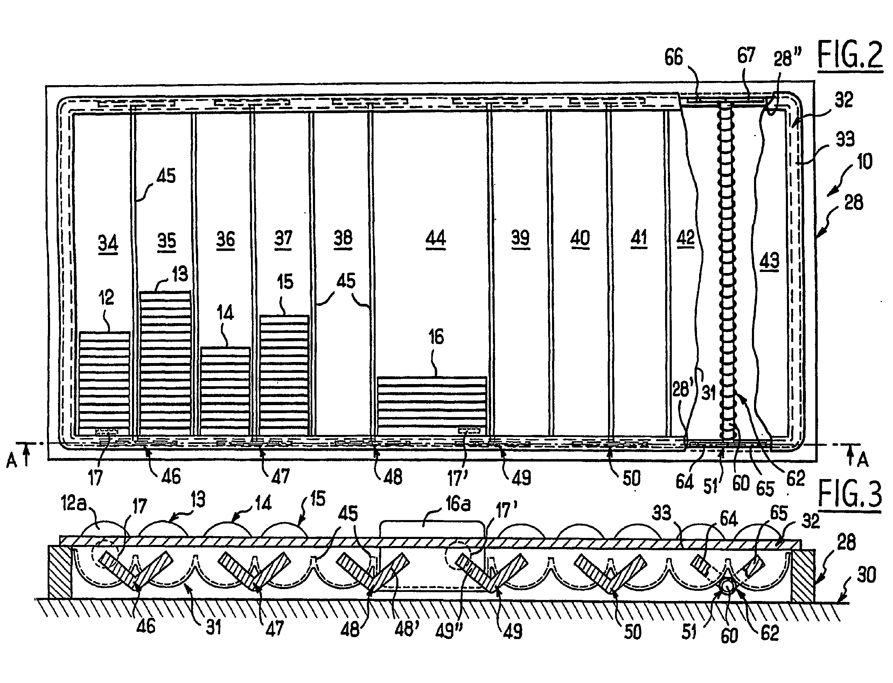

La structure de rangement de jetons 10 représentée plus en détails aux figures 2 et 3 se compose d'un châssis 28 en forme de cadre rectangulaire destiné à être posé sur un support (par exemple le plateau 30 d'une table de jeu, d'une table de change, d'une table de banque ou analogue représenté partiellement sur la figure 3) horizontalement à plat ou légèrement incliné vers l'avant c'est-à-dire vers l'opérateur. Le châssis 28, réalisé en matériau non métallique, par exemple en matière plastique rigide, porte un plateau réceptacle 32 pour jetons, également en matière plastique et en l'espèce amovible, essentiellement composé d'un fond 31 ceinturé d'un renfort rectangulaire 33 intégré donnant la rigidité nécessaire au plateau. Dans le fond 31 sont prévues les sections de rangement en colonne ou colonnes parallèles, en l'espèce deux groupes de cinq colonnes 34,35,36,37,38 et 39,40,41,42 de section semi-cylindrique notamment pour les piles 12, 13, 14 et 15 de jetons en forme disques et une colonne centrale 44 de section quasi-rectangulaire pour la pile 16 des plaques sensiblement rectangulaires, les colonnes étant séparées par des parois de séparation rectilignes 45.

Le châssis 28 porte également les six antennes 46 à 51 contrôlant chacune deux colonnes du plateau 32 et associées à l'unité électronique de dialogue 20. Ces antennes 46 à 51 feront l'objet d'une description détaillée ultérieurement dans cet exposé. Selon le choix du casino utilisateur le plateau 32 peut être amovible ou non par rapport au châssis 28 ou encore le plateau 32 peut être solidarisé avec le châssis 28 pour former un ensemble amovible ou non par rapport à la table support 30 (étant prévu en cas de montage amovible du châssis 28 sur la table 30 des moyens de connexion/déconnexion électrique sur la ligne multiple 52 entre les antennes 46 à 51 portées par le châssis 28 et la carte de multiplexage 24).

L'invention utilise des jetons et/ou plaques de jeu perfectionnés comportant un dispositif d'identification électronique du type "sans contact". De façon plus précise chaque jeton plaque (par exemple le jeton 12a ou la plaque 16a) comporte un circuit électronique 17 ou 17' dont la mémoire contient des informations codées propres au jeton de façon à permettre son identification et son authentification à l'aide d'une unité de lecture appropriée (unité de lecture seule ou unité de lecture/écriture fonctionnant en mode lecture). Dans la version la plus simple, les circuits électroniques (non représentés) des jetons sont du type à microcircuit et équipés d'une mémoire non reprogrammable (par exemple de type PROM) avec un code d'identification unique de 32 ou 64 bits dont les champs peuvent comporter le numéro de série du jeton ou du lot de jeton, la valeur nominale et d'autres informations telles que le nom du casino, etc.

Le circuit électronique d'identification 17 du jeton comporte de plus, quel que soit le type de la mémoire utilisée dans le jeton, un émetteur/récepteur à antenne périphérique à bobine circulaire également implanté au coeur du jeton 12a et adapté pour être alimenté par couplage inductif à partir de l'antenne extérieure de l'unité de lecture ou de l'unité de lecture/écriture dans le cas de la présente invention l'antenne 46 associée à l'unité électronique de dialogue 20.

Dans une version plus élaborée, les jetons sont à code évolutif et équipés de mémoire reprogrammable (par exemple de type EEPROM) permettant la lecture et l'écriture. Cette possibilité de modifier les informations contenues dans la mémoire augmente le degré de sécurité du jeton électronique en particulier en permettant de changer dans le temps les paramètres d'authentification. De même, il est possible de personnaliser certaines zones de la mémoire puis de les configurer de manière réversible ou non dans un mode défini de zone mémoire à accès en lecture seule ou de zones à accès en lecture/écriture. Dans une version encore plus élaborée, le jeton est équipé d'un microprocesseur susceptible de réaliser des traitements et des transactions complexes. De façon optionnelle, le dialogue entre l'unité électronique et le jeton n'est autorisé qu'après une mutuelle authentification, en introduisant des codes de type mots de passe et/ou clefs de cryptographie dans le jeton et l'unité électronique (notamment pour encrypter les données durant leur transfert entre l'unité électronique et le jeton et vice versa).

Par ailleurs, le circuit électronique des jetons est adapté pour permettre soit la lecture et/ou l'écriture simultanée de plusieurs jetons soit la discrimination entre les jetons, de façon à travailler sur des jetons ou plaques de jeu empilés. Dans le mode de réalisation de l'invention donné à titre non limitatif, l'unité de dialogue 20 intégrant la fonction de discrimination, notamment au niveau de la carte 26, est adaptée pour saisir l'identité d'un premier jeton dans un lot de jetons situé dans le champ rayonné de l'antenne active, par exemple les deux piles de jetons placées dans les colonnes 34 et 35 du plateau 32 et contrôlées par l'antenne 46. Il est alors possible de dialoguer avec ce premier jeton et de faire les opérations de lecture et/ou d'écriture désirées puis de désactiver le jeton saisi en lui envoyant une commande de mise en veille. L'unité de dialogue 20 continue ses interrogations à la recherche d'autres jetons dans la zone de travail de l'antenne active 46 pour saisir successivement tous les jetons présents. Après la saisie et/ou le traitement du dernier jeton, l'unité de dialogue 20 envoie une commande de réactivation de l'ensemble des jetons des deux colonnes 34 et 35 pour passer à une autre antenne jusqu'à lecture de tous les jetons et plaques présents sur le plateau 32 (avec élimination des doublons au niveau de la lecture de la pile de plaque 16. Cette fonction de discrimination des jetons est également appelée fonction anti-collision.

La structure et le mode de fabrication des jetons à circuit électronique à mémoire ne seront pas ici décrits en détails. A titre d'exemple non limitatif, la demande EP-A-0694872 au nom du demandeur présente plusieurs types de structures de jetons et plaques utilisables dans le cadre de la présente invention. De même la demande WO 97/30414 précités comporte des compléments d'informations sur le mode de fonctionnement général des dispositifs de rangement électronique pour jeton de jeu.

Si l'on considère les figures 2 et 3, les moyens formant antenne sont constitués des six antennes 46, 47, 48, 49, 50 et 51 sensiblement identiques, montées sur le châssis 28 sous les parois de séparation 45 séparant les colonnes 34-35, 36-37, 38-44, 44-39, 40-41 et 42-43 assez près du fond 31 des colonnes correspondantes. Comme on peut le voir à la figure 2 où un arrachement partiel du fond 31 dans le dessin montre l'antenne 51 disposée symétriquement entre les colonnes 42 et 43, chaque antenne, en l'espèce l'antenne 51, est constituée d'un barreau de ferrite 60 entouré en tout ou partie d'une bobine à fil conducteur de forme cylindrique 62 reliée électriquement à une des lignes d'entrée 52 de la carte de multiplexage 24 (en l'espèce à l'entré E6), le barreau 60 présentant à chaque extrémité deux pattes planes 64,65 et 66,67 en ferrite, réalisées de préférence en une seule pièce, s'étendant dans un plan sensiblement perpendiculaire au barreau et disposées en vis-à-vis deux à deux, 64-66 et 65-67 respectivement, en partie (à leurs extrémités libres) aux deux extrémités des colonnes 42 et 43. Le barreau 60 et les pattes 64,65 et 66,67 sont fixées par tout moyen approprié au châssis 28, en général par collage sur les faces intérieures en vis-à-vis 28' et 28". Dans le mode de réalisation particulier des antennes 46-51 illustrées aux figures 2 et 3, les deux pattes d'extrémité forment un V élargi à grand angle de façon surélever la zone de lecture des jetons par rapport au barreau 60 (pour mettre les extrémités libres des pattes 64-66 et 65-67 respectivement en alignement avec les zones centrales des colonnes 42 et 43 zones où sont également plus ou moins alignés les antennes des dispositifs électroniques à mémoire 17 des jetons présents dans les colonnes semi-cylindriques). En pratique l'ouverture de l'angle V, qui peut être grande ou faible, et la longueur des pattes sont choisies en fonction des dimensions géométriques du plateau 32 et du châssis 28 et de la place disponible notamment pour placer les barreaux d'antenne 60 sous le plateau 32.

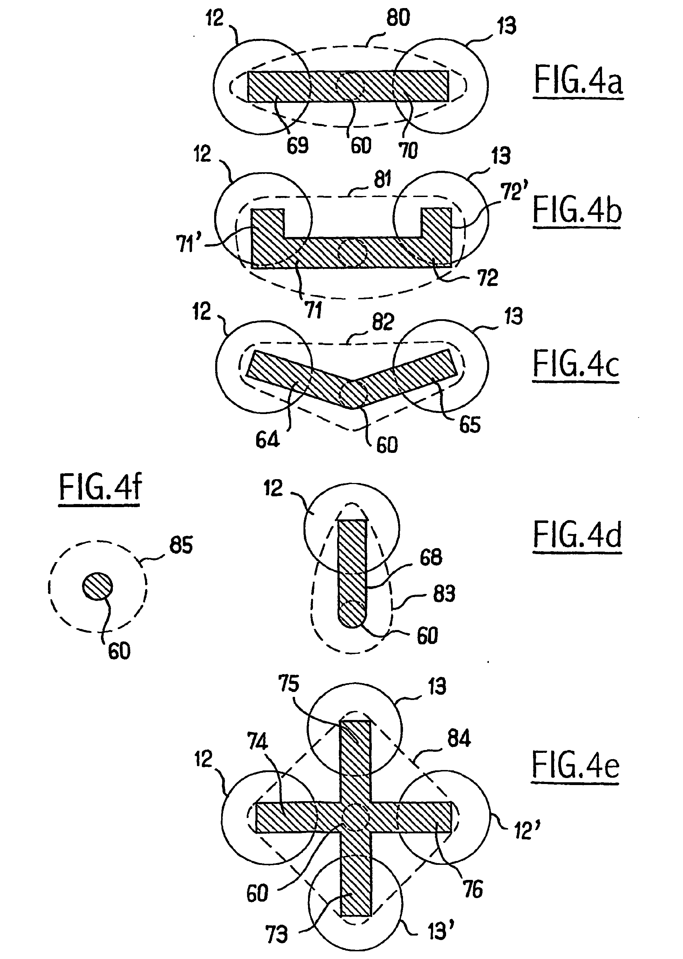

De plus comme on peut le constater sur la figure 4 le champ magnétique s'étendant entre les pattes en vis-à-vis à tendance à s'élargir de par la forme des extrémités avec des pattes doubles en V (voir fig. 4c, ligne à tirets 82) notamment par rapport à des pattes doubles en alignement (fig. 4a, ligne à tirets 80). En ce qui concerne la saisie électronique (lecture et/ou écriture) des plaques 16, il est prévu deux antennes latérales (en l'espèce la patte droite 48' de l'antenne 48 et la patte gauche 49" de l'antenne 49) pour pouvoir communiquer (en l'espèce par l'antenne 49) avec le circuit électronique à mémoire 17' quelle que soit sa position dans la plaque 16, étant prévu dans l'unité 22 un algorithme d'élimination de double saisie éventuelle.

A titre non limitatif, les barreaux de ferrite 60 utilisés ont un diamètre de l'ordre de 1,3 cm et une longueur de 22,5 cm environ. Cette longueur pour les barreaux 60 permet la lecture/écriture de 60 jetons d'environ 3,8 mm d'épaisseur par colonne. Les pattes en ferrite ont une longueur d'environ 3 à 4 cm, une largeur de l'ordre du centimètre et une épaisseur de l'ordre de 0,25 cm. Les pattes sont en général fixées aux barreaux par collage. Les ferrites ont des caractéristiques correspondant à la gamme de fréquence des transpondeurs (en l'espèce 125 kHz) avec une perméabilité comprise entre 100 et 250. Les pertes dues aux ferrites doivent rester faibles de façon à réduire le plus possible la résistance équivalente de l'antenne (pour une antenne prévue pour la lecture/écriture de deux colonnes de 60 jetons, la résistance équivalente doit rester inférieure à 20 Ohms).

En ce qui concerne la durée des transactions, les performances du dispositif de rangement selon l'invention réalisables avec les composants aujourd'hui à disposition en technologie 125 kHz sont de l'ordre d'une dizaine de secondes pour la saisie de deux colonnes de 60 jetons empilés. Bien entendu, la forme, le nombre, la disposition et la localisation des antennes de l'unité de dialogue et de l'interface de sélection d'antennes sont susceptibles d'adaptation en fonction des contraintes de fabrication et/ou des diverses spécifications données par les exploitants des casinos tout en restant dans le cadre de la présente invention.

L'invention concerne également des casiers, plateaux, distributeurs verticaux, carrousels et autres équipements de rangement à colonnes pour jetons de jeu, plaques de jeu ou analogues adaptés pour être utilisés dans un dispositif de rangement selon l'invention, en particulier des casiers et plateaux équipés d'antennes de saisie de colonnes de jetons de type bobinées à barreau de ferrite et à pattes d'extrémité en ferrite en vis-à-vis.

L'invention concerne également des antennes bobinées à barreau de ferrite et à pattes d'extrémité en ferrite en vis-à-vis destinées à un dispositif de rangement électronique de jetons, plaques ou objets analogues plats à circuits électroniques à mémoire dans lequel ces objets à circuits électroniques sont rangés en colonnes. Ici encore, la forme, le nombre, la disposition et la localisation des antennes par rapport à de l'unité de dialogue et de l'interface de sélection d'antennes sont susceptibles d'adaptation en fonction des contraintes de fabrication et/ou des diverses spécifications données par les utilisateurs tout en restant dans le cadre de la présente invention.

Les figures 4a à 4e illustrent en vue de côté diverses variantes de réalisation d'antennes (bobines non représentées) utilisables dans le cadre de la présente invention et données à titre d'exemples non limitatifs. Pour chaque figure on a montré en pointillé la section droite du barreau 60, la ou les pattes d'extrémité en ferrite, les silhouettes des colonnes de jetons 12, 12', 13, 13' et une courbe de champ représentative du profil de l'enveloppe du champ magnétique rayonné soit par le barreau seul (voir fig. 4f, le cercle en tirets 85) soit par les diverses structures à pattes en ferrite (courbes de champ en tirets 80,81,82,83,84 et 85), les lignes de champ magnétique au côté des barreaux 60 s'étendant sensiblement parallèlement à ces derniers et perpendiculairement au plan des figures 4a à 4f.

La figure 4f montre le profil 85 du champ rayonné par le seul barreau 60. Ce profil n'est pas adapté à la lecture/écriture (saisie électronique) d'un jeton ou d'une plaque de jeu. L'objet des pattes additionnelles de tailles et/ou de formes diverses est de pouvoir modifier la symétrie de l'antenne et/ou la forme du champ magnétique pour atteindre la partie centrale de la colonne de jetons (zone d'alignement des antennes des jetons) et de conformer l'antenne avec la place disponible entre le plateau 32 et le châssis 28.

La figure 4a montre la disposition d'une antenne à pattes doubles 69, 70 alignées avec une courbe de champ 80 excentrée par rapport au barreau 60 et un peu rétrécie au niveau de l'extrémité libre des pattes. Le même phénomène se retrouve à la figure 4d avec la courbe 83 rétrécie au niveau de l'extrémité de la patte 68 pour une antenne à simple patte. Dans la pratique ce rétrécissement n'est pas vraiment gênant pour la lecture des jetons.

Les figures 4b et 4c montrent les dispositions des deux antennes à pattes doubles, respectivement une structure de ferrite à pattes coudée 71-71',72-72' dans laquelle les deux coudes 71' et 72' placés au droit des colonnes de jetons 12 et 13 sont disposés en vis-à-vis pour former un U à large base et la structure en V élargi à grand angle avec les pattes 64 et 65 décrite ci-avant. On remarque que dans les deux cas les courbes 81 et 82 sont élargies au niveau des extrémités libres des pattes.

Il en est de même pour la courbe 84 montrée à la figure 4e dans laquelle la structure de ferrite comporte quatre pattes d'extrémité en croix 73, 74, 75 et 76 équiréparties par rapport à l'axe du barreau 60, à angle droit les unes des autres. Ce dernier type d'antenne est utilisé dans les casiers et carrousels à colonnes verticales.

## Revendications

1. Dispositif de rangement pour jetons de jeu à circuit électronique à mémoire comportant une structure de rangement (10) munie d'au moins une section de rangement en colonne (34,42,43), ci-après colonne, destinée à recevoir des jetons (12), et une unité électronique de dialogue (20) comportant des moyens de lecture dans la mémoire des jetons pour communiquer par des moyens formant antenne (46-51) avec les jetons présents dans au moins une colonne (34) de ladite structure de rangement, le dispositif étant **caractérisé en ce que** les moyens formant antenne (46-51) comportent au moins une antenne de type bobiné comportant un barreau de ferrite (60) entouré en tout ou partie d'une bobine en fil conducteur (62) et présentant à chaque extrémité au moins une patte plane (64-67) de ferrite s'étendant dans un plan sensiblement perpendiculaire au barreau, les pattes étant disposées en vis-à-vis deux par deux (64,66;65,67) en tout ou partie aux deux extrémités d'au moins une colonne (42,43).

2. Dispositif selon la revendication 1, **caractérisé en ce que** ledit barreau de ferrite (60) est associé à chaque extrémité du barreau à une pluralité de pattes (64-67) disposées sensiblement symétriquement par rapport à un plan passant par ledit barreau ou par rapport à l'axe du barreau.

3. Dispositif selon la revendication 2, **caractérisé en ce que** ladite pluralité comporte deux pattes soit alignées (69,70), soit disposées en U (71,72) ou en V (64,65).

4. Dispositif selon la revendication 3, **caractérisé en ce que** ladite structure de rangement (10) présente un arrangement sensiblement plan de colonnes parallèles (34-44), les colonnes étant associées deux à deux à une antenne (46-51) et disposées de part et d'autre du barreau correspondant, les extrémités libres des pattes (64,66;65,67) en vis-à-vis s'étendant sensiblement en alignement respectivement chacune avec des régions centrales des deux colonnes.

5. Dispositif selon la revendication 4, **caractérisée en ce que** ladite structure (10) comporte au moins une colonne de grande largeur (44) disposée en deux antennes (48,49) présentant des pattes se projetant sensiblement en alignement avec les régions latérales de ladite colonne de grande largeur (44).

6. Dispositif selon l'une des revendications 4 et 5, **caractérisé en ce que** ladite structure de rangement (10) comporte un plateau réceptacle à jetons (32) et dans lequel sont prévues les colonnes parallèles pour jetons (34-44) séparées les unes des autres par des parois rectilignes (45), les barreaux d'antenne (60) étant disposés sous lesdites parois, de préférence assez près du fond (31) des colonnes.

7. Dispositif selon la revendication 6, **caractérisé en ce que** la structure de rangement (10) comporte un châssis (28) porteur des antennes (46-51) et destiné à recevoir de façon amovible ou non le plateau réceptacle (32) à jetons.

8. Dispositif selon la revendication 2, **caractérisé en ce que** ladite pluralité est constituée de pattes (73-76) rayonnant autour de l'axe de barreau de façon équirépartie.

9. Dispositif selon l'une des revendications précédentes **caractérisé en ce que** l'unité électronique de dialogue (20) communique avec les jetons (12), selon un mode "sans contact", par ondes modulées par l'intermédiaire des moyens formant antenne (46-51) et comportant au moins une antenne (46) associée auxdits moyens de lecture, lesdits moyens formant antenne étant disposés par rapport à la structure de rangement de façon à assurer la communication avec les jetons présents dans au moins une colonne (34) de ladite structure.

10. Dispositif selon l'une des revendications précédentes, **caractérisé en ce que** l'unité électronique de dialogue (20) comporte des moyens d'écriture dans la mémoire des jetons présents dans ladite colonne (34) de ladite structure (10).

11. Dispositif selon l'une des revendications précédentes, **caractérisé en ce que** l'unité électronique de dialogue (20) et les circuits électroniques à mémoire des jetons sont adaptés pour permettre à l'unité de dialogue (20) de discriminer les jetons (12) présents dans la même colonne (34).

12. Dispositif selon l'une des revendications précédentes, comportant plusieurs antennes (46-51), **caractérisé en ce que** l'unité électronique de dialogue (20) comporte des moyens de sélection séquentielle (24) des antennes.

13. Antenne (46-51) pour dispositif de rangement électronique de jetons, plaques ou objets analogues plats à circuits électroniques à mémoire selon l'une des revendications précédentes, **caractérisée en ce qu'**elle comporte un barreau de ferrite (60) entouré en tout ou partie d'une bobine en fil conducteur (62) et présentant à chaque extrémité au moins une patte plane de ferrite s'étendant dans un plan sensiblement perpendiculaire au barreau, les pattes (64-67) étant disposées en vis-à-vis deux par deux (64,66;65,67) en tout ou partie aux deux extrémités d'au moins une structure de rangement en colonne (42,43) destinée à recevoir jetons, plaques ou objets analogues plats à circuits électroniques à mémoire.

14. Antenne selon la revendication 13, **caractérisée en ce que** ledit barreau de ferrite (60) est associé à chaque extrémité du barreau à une pluralité de pattes (64-67) disposées sensiblement symétriquement par rapport à un plan passant par ledit barreau ou par rapport à l'axe du barreau.

15. Antenne selon la revendication 14, **caractérisée en ce que** ladite pluralité comporte deux pattes soit alignées (69,70) soit disposées en U (71,72) ou en V (64-67).

16. Antenne selon la revendication 14, **caractérisée en ce que** ce que ledit barreau de ferrite (60) est associé à chaque extrémité du barreau à une pluralité de pattes (73-76) rayonnant autour de l'axe de barreau de façon équirépartie.

## Patentansprüche

1. Einrichtung zum Speichern von Spielchips mit elektronischer Speicherschaltung, die eine Speicherstruktur (10) umfasst, die mit mindestens einem Säulenspeicher-Abschnitt (34, 42, 43), im Folgenden Säule genannt, ausgestattet ist, der dazu bestimmt ist, Chips (12) aufzunehmen, und eine elektronische Dialogeinheit (20), die Mittel zum Lesen im Speicher der Chips umfasst, um mithilfe von antennenbildenden Mitteln (46 - 51) mit den Chips zu kommunizieren, die in mindestens einer Säule (34) der Speicherstruktur vorhanden sind, wobei die Einrichtung **dadurch gekennzeichnet ist, dass** die antennenbildenden Mittel (46 - 51) mindestens eine Antenne vom Typ Spule umfassen, die einen Ferritstab (60) umfasst, der ganz oder teilweise mit einer Spule aus Leitungsdraht (62) umgeben ist und an jedem Ende mindestens einen flachen Fuß (64 - 67) aus Ferrit aufweist, der in einer im Wesentlichen senkrechten Ebene zum Stab verläuft, wobei jeweils zwei Füße einander gegenüber angeordnet sind (64, 66; 65, 67), ganz oder teilweise an den zwei Enden der mindestens einen Säule (42, 43).

2. Einrichtung nach Anspruch 1, **dadurch gekennzeichnet, dass** der Ferritstab (60) an jedem Ende des Stabs mit einer Vielzahl von Füßen (64 - 67) verbunden ist, die im Wesentlichen symmetrisch im Verhältnis zu einer Ebene angeordnet sind, die durch den Stab verläuft, oder im Verhältnis zur Achse des Stabs.

3. Einrichtung nach Anspruch 2, **dadurch gekennzeichnet, dass** die Vielzahl zwei Füße umfasst, die entweder in einer geraden Linie ausgerichtet (69, 70), als U (71, 72) oder als V (64, 65) angeordnet sind.

4. Einrichtung nach Anspruch 3, **dadurch gekennzeichnet, dass** die Speicherstruktur (10) eine im Wesentlichen ebene Anordnung paralleler Säulen (34 - 44) aufweist, wobei jeweils zwei Säulen mit einer Antenne (46 - 51) verbunden und zu beiden Seiten des entsprechenden Stabs angeordnet sind, wobei die freien Enden der gegenüber liegenden Füße (64, 66; 65, 67) jeweils im Wesentlichen in Ausrichtung zu den mittleren Bereichen der Säulen verlaufen.

5. Einrichtung nach Anspruch 4, **dadurch gekennzeichnet, dass** die Speicherstruktur (10) mindestens eine Säule von großer Breite (44) umfasst, die in zwei Antennen (48, 49) angeordnet ist, die Füße umfassen, die sich im Wesentlichen in Ausrichtung zu den seitlichen Bereichen der Säule von großer Breite (44) erstrecken.

6. Einrichtung nach einem der Ansprüche 4 und 5, **dadurch gekennzeichnet, dass** die Speicherstruktur (10) eine Aufnahmeplatte für Chips (32) umfasst, in der die parallelen Säulen für Chips (34 - 44) vorgesehen sind, die voneinander durch geradlinige Wände (45) getrennt sind, wobei die Antennenstäbe (60) unter den Wänden angeordnet sind, vorzugsweise ziemlich nahe am unteren Teil (31) der Säulen.

7. Einrichtung nach Anspruch 6, **dadurch gekennzeichnet, dass** die Speicherstruktur (10) ein Traggestell (28) für die Antennen (46 - 51) umfasst, das dazu bestimmt ist, die Aufnahmeplatte (32) für Chips abnehmbar oder nicht abnehmbar aufzunehmen.

8. Einrichtung nach Anspruch 2, **dadurch gekennzeichnet, dass** die Vielzahl aus Füßen (73 - 76) besteht, die um die Achse des Stabs herum gleich verteilt abgehen.

9. Einrichtung nach einem der vorhergehenden Ansprüche, **dadurch gekennzeichnet, dass** die elektronische Dialogeinheit (20) mit den Chips (12) kommuniziert, gemäß einem "berührungslosen Verfahren", durch Wellen, die mithilfe von antennenbildenden Mitteln (46 - 51) moduliert werden, und die mindestens eine Antenne (46) umfassen, die mit den Mitteln zum Lesen verbunden ist, wobei die antennenbildenden Mittel so im Verhältnis zur Speicherstruktur angeordnet sind, dass sie die Kommunikation mit den Chips sicherstellt, die in der mindestens einen Säule (34) der Struktur vorhanden sind.

10. Einrichtung nach einem der vorhergehenden Ansprüche, **dadurch gekennzeichnet, dass** die elektronische Dialogeinheit (20) Mittel zum Schreiben in dem Speicher der Chips umfasst, die in der Säule (34) der Struktur (10) vorhanden sind.

11. Einrichtung nach einem der vorhergehenden Ansprüche, **dadurch gekennzeichnet, dass** die elektronische Dialogeinheit (20) und die elektronischen Speicherschaltkreise der Chips so angepasst sind, dass sie es der Dialogeinheit (20) ermöglichen, die Chips (12) zu unterscheiden, die in derselben Säule (34) vorhanden sind.

12. Einrichtung nach einem der vorhergehenden Ansprüche, die mehrere Antennen (46 - 51) umfasst, **dadurch gekennzeichnet, dass** die elektronische Dialogeinheit (20) Mittel zur sequentiellen Selektion (24) der Antennen umfasst.

13. Antenne (46-51) für eine Einrichtung zum elektronischen Speichern von Chips, Plättchen oder gleichartigen flachen Gegenständen mit elektronischen Speicherschaltkreisen nach einem der vorhergehenden Ansprüche, **dadurch gekennzeichnet, dass** sie einen Ferritstab (60) umfasst, der ganz oder teilweise mit einer Spule aus Leitungsdraht (62) umgeben ist und an jedem Ende mindestens einen flachen Fuß aus Ferrit aufweist, der in einer Ebene verläuft, die im Wesentlichen senkrecht zum Stab verläuft, wobei jeweils zwei Füße (64 - 67) einander gegenüber angeordnet sind (64, 66; 65, 67), ganz oder teilweise an den zwei Enden der mindestens einen Säulenspeicherstruktur (42, 43), die dazu bestimmt ist, Chips, Plättchen oder gleichartige flache Gegenstände mit elektronischen Speicherschaltungen aufzunehmen.

14. Antenne nach Anspruch 13, **dadurch gekennzeichnet, dass** der Ferritstab (60) an jedem Ende des Stabs mit einer Vielzahl von Füßen (64 - 67) verbunden ist, die im Wesentlichen symmetrisch im Verhältnis zu einer Ebene angeordnet sind, die durch den Stab verläuft, oder im Verhältnis zur Achse des Stabs.

15. Antenne nach Anspruch 14, **dadurch gekennzeichnet, dass** die Vielzahl zwei Füße umfasst, die entweder in einer geraden Linie ausgerichtet (69, 70), als U (71, 72) oder als V (64 - 67) angeordnet sind.

16. Antenne nach Anspruch 14, **dadurch gekennzeichnet, dass** der Ferritstab (60) an jedem Ende des Stabs mit einer Vielzahl von Füßen (73 - 76) verbunden ist, die um die Achse des Stabes herum gleich verteilt abgehen.

## Claims

1. A storage device for chips including an electronic circuit including a memory, said device comprising a storage structure (10) provided with at least one columnar storage section (34, 42, 43), hereinafter referred to as a column, adapted to receive chips (12), and a dialog electronic unit (20) including means for reading the memory in the chips to communicate via antenna means (46-51) with the chips present in at least one column (34) of said storage structure, the device being **characterized in that** the antenna means (46-51) include at least one antenna of the coil type comprising a ferrite rod (60) partly or wholly surrounded by a conductive wire coil (62) and having at each end at least one plane ferrite lug (64-67) lying in a plane substantially perpendicular to the rod, the lugs being disposed face-to-face in pairs (64, 66; 65, 67) in whole or in part at the two ends of at least one column (42, 43).

2. A device according to claim 1, **characterized in that** each end of said ferrite rod (60) is associated with a plurality of lugs (64-67) disposed substantially symmetrically relative to a plane passing through said rod or relative to the rod axis.

3. A device according to claim 2, **characterized in that** said plurality of lugs comprises two aligned lugs (69, 70) or two lugs disposed in a U-shape (71, 72) or two lugs disposed in a V-shape (64, 65).

4. A device according to claim 3, **characterized in that** said storage structure (10) features a substantially plane arrangement of parallel columns (34-44) associated in pairs with an antenna (46-51) and disposed on either side of the corresponding rod, the free ends of the facing lugs (64, 66; 65, 67) each being substantially in alignment with respective central regions of the two columns.

5. A device according to claim 4, **characterized in that** said structure (10) includes at least one wide column (44) disposed in two antennas (48, 49) having projecting lugs substantially aligned with the lateral regions of said wide column (44).

6. A device according to either claim 4 or claim 5, **characterized in that** said storage structure (10) includes a chip receptacle tray (32) comprising parallel columns for chips (34-44) separated from each other by rectilinear walls (45), the antenna rods (60) being disposed under said walls, preferably relatively close to the bottom (31) of the columns.

7. A device according to claim 6, **characterized in that** the storage structure (10) includes a frame (28) carrying the antennas (46-51) and adapted to receive the chip receptacle tray (32), removably or not.

8. A device according to claim 2, **characterized in that** said plurality of lugs comprises equi-angularly distributed lugs (73-76) radiating about the rod axis.

9. A device according to any preceding claim, **characterized in that** the dialog electronic unit (20) communicates with the chips (12) in a "contactless" mode by means of modulated waves via antenna means (46-51) that include at least one antenna (46) associated with said reading means and are disposed relative to the storage structure to provide communication with the chips present in at least one column (34) of said structure.

10. A device according to any preceding claim, **characterized in that** the dialog electronic unit (20) includes means for writing into the memory of chips in said column (34) of said structure (10).

11. A device according to any preceding claim, **characterized in that** the dialog electronic unit (20) and the memory electronic circuits of the chips are adapted to enable the dialog unit (20) to discriminate between chips (12) in the same column (34).

12. A device according to any preceding claim, including a plurality of antennas (46-51), **characterized in that** the dialog electronic unit (20) includes sequential antenna selector means (24).

13. An antenna (46-51) for use in an electronic storage device for flat chips, plates or like objects incorporating memory electronic circuits according to any preceding claim, which antenna is **characterized in that** it includes a ferrite rod (60) surrounded in whole or in part by a conductive wire coil (62) and having at each end at least one plane ferrite lug lying in a plane substantially perpendicular to the rod, the lugs (64-67) being disposed face-to-face in pairs (64, 66; 65, 67), in whole or in part, at the two ends of at least one column storage structure (42, 43) adapted to receive flat chips, plates or like objects incorporating memory electronic circuits.

14. An antenna according to claim 13, **characterized in that** each end of said ferrite rod (60) is associated with a plurality of lugs (64-67) disposed substantially symmetrically with respect to a plane passing through said rod or with respect to the rod axis.

15. An antenna according to claim 14, **characterized in that** said plurality of lugs includes two lugs that are either aligned (69, 70) or disposed in a U-shape (71, 72) or a V-shape (64-67).

16. An antenna according to claim 14, **characterized in that** each end of said ferrite rod (60) is associated with a plurality of equi-angularly distributed lugs (73-76) radiating around the rod axis.
